(19) Europäisches Patentamt
European Patent Office
Office européen des brevets

(11) Numéro de publication: **0 353 147 A1**

(12) **DEMANDE DE BREVET EUROPEEN**

(21) Numéro de dépôt: **89402113.8**

(22) Date de dépôt: **25.07.89**

(51) Int. Cl.5: **G 01 N 17/00**

(30) Priorité: **26.07.88 FR 8810065**

(43) Date de publication de la demande: **31.01.90 Bulletin 90/05**

(84) Etats contractants désignés: **AT BE CH DE ES FR GB GR IT LI LU NL SE**

(71) Demandeur: **ADVANCED TECHNOLOGIES INDUSTRY**
**6, rue Jean-Pierre Timbaud**
**F-78180 Montigny le Bretonneux (FR)**

(72) Inventeur: **Pellat Yann**
**33, rue Edme Fremy**
**78000 Versailles (FR)**

(74) Mandataire: **Nony, Michel et al**
**Cabinet NONY & CIE 29, rue Cambacérès**
**F-75008 Paris (FR)**

(54) **Procédé et dispositif de détermination de la vitesse de corrosion d'une structure métallique continue enterrée ou immergée.**

(57) L'invention est relative à un procédé de détermination de la vitesse de corrosion d'une structure métallique continue enterrée selon laquelle on injecte un courant électrique, on en déduit la courbe d'impédance de transfert métal de la structure/surface, on mesure en des points discrets la résistivité de l'environnement, on corrèle les mesures d'impédance aux mesures de résistivité pour obtenir la courbe de résistivité et on déduit la situation de corrosion des courbes de résistivité et de tension.

Fig: 3
10
14
12
13
i
11
2
1

EP 0 353 147 A1

## Description

### Procédé et dispositif de détermination de la vitesse de corrosion d'une structure métallique continue enterrée ou immergée.

La présente invention concerne un procédé de détermination de la vitesse de corrosion d'une structure métallique continue enterrée ou immergée.

Il est souvent essentiel de connaître avec précision les paramètres de corrosion d'une structure métallique, c'est-à-dire, non seulement de savoir si elle est ou non en état de corrosion, mais encore, lorsqu'elle est effectivement en état de corrosion, de pouvoir déterminer la vitesse à laquelle cette corrosion se développe.

Ceci est particulièrement le cas de structures en acier placées en permanence dans un milieu solide ou liquide. On peut citer, à titre d'exemple, les réseaux de canalisation, les réservoirs ou les citernes partiellement ou totalement enterrés, ainsi que tous les ensembles métalliques immergés que ce soit en milieu marin ou en milieu fluvial.

La corrosion de ces structures métalliques entraîne à plus ou moins long terme de nombreuses défaillances (affaiblissement de la résistance mécanique, fuites de produit, perte de fiabilité, etc.) pouvant avoir des conséquences catastrophiques telles que des pollutions en tout genre ou de graves pertes économiques.

La présente invention vise à fournir un procédé et un dispositif permettant de déterminer la vitesse potentielle de corrosion d'une telle structure, vitesse potentielle qui est également une vitesse réelle de corrosion dans le cas où la structure n'est pas revêtue d'un isolant électrique ou dans le cas où cet isolant électrique existe mais est endommagé.

A cet effet, l'invention a tout d'abord pour objet un procédé de détermination de la vitesse de corrosion d'une structure métallique continue enterrée ou immergée, caractérisé par le fait que l'on injecte un courant électrique entre ladite structure et des points de la surface sensiblement continûment répartis au voisinage de la structure, que l'on en déduit la courbe d'impédance de transfert métal de la structure/surface, que l'on mesure en des points significatifs la résistivité de l'environnement, que l'on corrèle les mesures d'impédance aux mesures de résistivité pour obtenir la courbe de résistivité, que l'on mesure, en l'absence de courant injecté et en des points sensiblement continûment répartis de la structure, la tension d'interface métal de la structure/environnement et que l'on déduit les possibilités de corrosion des courbes de résistivité et de tension.

Les structures métalliques enterrées ou immergées peuvent être soit non protégées cathodiquement, revêtues ou non d'une matière d' isolation électrique, soit protégées cathodiquement et, dans ce cas, presque toujours séparées du milieu environnant par une couche du revêtement électriquement isolante.

Dans un mode de réalisation particulier de l'invention appliqué à une structure non protégée cathodiquement, on mesure également, en l'absence de courant injecté et en des points sensiblement continûment répartis de la structure, la tension métal de la structure/surface, on déduit la courbe de densité de courant de la différence des deux courbes de tension et de la courbe de résistivité, et l'on déduit la vitesse de corrosion de la courbe de densité de courant.

Dans un autre mode de réalisation particulier de l'invention appliqué à une structure protégée cathodiquement, on déduit la vitesse de corrosion de la courbe de résistivité et de la courbe obtenue par soustraction d'une valeur fixe à la courbe de tension d'interface.

On comprend par conséquent que le procédé selon l'invention repose essentiellement sur deux types de mesure, qui peuvent d'ailleurs être faites dans un ordre indifférent.

Il s'agit tout d'abord de mesures de paramètres extrinsèques à l'ensemble structure-environnement, c'est-à-dire de paramètres caractérisant la réponse de cet ensemble à une ou des excitations données.

Ces mesures de paramètres extrinsèques comportent elles-mêmes deux phases.

Dans une des phases, on injecte un courant dans la structure en des points continûment répartis (excitation) en relevant les caractéristiques courant-tension, et on en déduit la fonction de transfert du milieu, c'est-à-dire son impédance.

Toutefois, cette impédance n'est pas suffisante en elle-même pour la détermination de la vitesse de corrosion puisque cette vitesse ne peut se calculer directement à partir du courant sortant de la structure, mais à partir de la densité de courant. On mesure donc en outre la résistivité du milieu en des points significatifs par tout procédé précis et notamment par le système d'analyse automatique d'au moins deux niveaux (en profondeur) de résistance de moyenne.

On corrèle alors la courbe d'impédance à ces résistivités pour en déduire la courbe de résistivité en tout point.

L'autre type de mesure effectué selon l'invention consiste en des mesures de paramètres intrinsèques à l'ensemble structure-environnement, c'est-à-dire de paramètres mesurés en l'absence de toute excitation.

Ces mesures de paramètres intrinsèques comprennent toujours une phase consistant à mesurer la tension d'interface entre la structure et son environnement direct. Dans le cas d'une structure protégée cathodiquement, la courbe de tension ainsi obtenue est suffisante au moins pour une des variantes de l'invention pour la détermination de la densité de courant et donc de la vitesse de corrosion, puisqu'il suffit en effet de rapporter cette tension à une tension de référence prédéterminée égale par exemple à -950 mV (ou - 850 mV selon des critères moins exigeants).

Par contre, dans le cas d'une structure non protégée cathodiquement, il y a lieu de prendre en compte la tension réelle de corrosion, c'est-à-dire la différence entre la tension d'interface et la tension correspondante structure/surface pour en déduire la densité de courant par division de cette différence de tension par la résistivité.

On notera d'ailleurs que, dans le cas d'une structure protégée cathodiquement, le métal est passivé dans la mesure où la tension d'interface est plus négative que la tension de référence de - 950 mV, et qu'il n'y a donc dans ce cas aucun risque de corrosion. Il en est de même pour une structure non protégée cathodiquement dans le cas où la tension structure/surface est plus négative que la tension d'interface. Dans l'un et l'autre cas, en effet, le courant au niveau de l'interface est un courant entrant dans la structure.

Enfin, dans le cas où la structure est revêtue d'un isolant électrique, il n'y aura pas de corrosion quelque soit la vitesse potentielle de corrosion déterminée comme ci-dessus tant que le revêtement sera en bon état. Il y a donc lieu, dans ce cas, de déterminer un dernier paramètre pour connaître l'état de corrosion de la structure, à savoir, en chaque point, l'état du revêtement isolant.

La présente invention a également pour objet un dispositif pour la mise en oeuvre du procédé tel que décrit ci-dessus, caractérisé par le fait qu'il comprend un ensemble mobile à la surface du milieu dans lequel ladite structure métallique continue est enterrée ou immergée, ledit ensemble mobile comprenant une pluralité d'électrodes agencées pour rester en contact électrique permanent avec la surface au cours du déplacement, au moins l'une des électrodes étant une électrode métallique pour injecter un courant électrique dans ladite structure et au moins une autre électrode étant une électrode de référence pour mesurer la tension de l'interface métal de la structure/environnement ; un ensemble de mesure et de mémorisation pour mesurer le courant injecté et les tensions correspondantes et les mémoriser ; et un ensemble de calcul pour déduire la vitesse de corrosion des mesures mémorisées.

Les mesures sont effectuées de façon sensiblement continue le long de la structure de manière à obtenir les courbes précitées, c'est-à-dire qu'en fait, elles seront généralement effectuées par échantillonnage avec un pas très faible, de l'ordre par exemple du centimètre.

Les mesures de paramètres intrinsèques peuvent être réalisées par des moyens pour mesurer la tension entre une électrode métallique et une électrode de référence en contact électrique avec deux points de la surface proches l'un de l'autre et un commutateur pour connecter sélectivement l'électrode métallique à la structure.

Cette dernière mesure peut également être faite à l'aide de trois électrodes de référence en contact électrique avec la surface, et de moyens pour mesurer la tension entre une électrode de référence centrale et les deux électrodes de référence latérales.

l'ensemble de calcul peut comprendre des moyens pour calculer la résistivité de l'environnement à partir des données fournies par l'ensemble de mesure et de mémorisation, ainsi qu'une mémoire pour mémoriser des tables de correspondance entre la résistivité calculée et la tension mesurée d'une part, et la vitesse de corrosion d'autre part.

Le dispositif selon l'invention peut également comprendre des moyens pour déterminer l'état d'un revêtement isolant sur la structure.

Selon une caractéristique particulièrement avantageuse de l'invention, au moins une desdites électrodes est électriquement en contact avec la surface par l'intermédiaire d'un jet de liquide conducteur.

On décrira maintenant à titre d'exemples non limitatifs des modes de réalisation particuliers de l'invention en référence aux dessins schématiques annexés dans lesquels :

- la figure 1 représente un premier mode de réalisation des mesures de tension structure/surface et structure/environnement,
- la figure 2 en représente un deuxième mode de réalisation,
- la figure 3 illustre le principe de mesure de l'impédance de transfert structure/surface,
- les figures 4 et 5 sont des diagrammes de détermination de la vitesse de corrosion respectivement pour une structure non protégée cathodiquement et une structure protégée,
- la figure 6 est un schéma fonctionnel du dispositif selon l'invention,
- la figure 7 représente un mode de réalisation particulier des électrodes,
- les figures 8a à 8c représentent les différentes configurations des capteurs correspondant aux diverses phases de mesure et,
- la figure 9 est un exemple de résultat obtenu par le procédé et le dispositif selon l'invention.

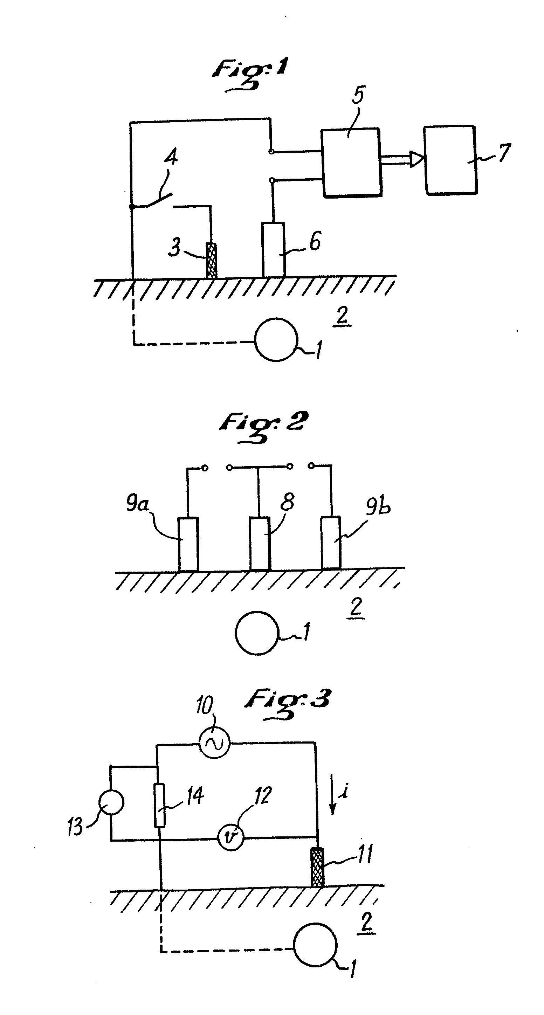

La figure 1 représente une structure métallique 1 telle qu'une canalisation enterrée dans un terrain 2. Elle pourrait bien entendu être non pas enterrée mais immergée, le procédé mis en oeuvre étant identique, sauf quant au choix de l'électrode de référence.

La canalisation 1 est reliée à une électrode métallique 3 par l'intermédiaire d'un interrupteur 4.

Elle est également reliée à une entrée d'une chaîne d'acquisition et de mémorisation de mesures 5.

L'autre entrée de la chaîne 5 est reliée à une électrode de référence 6 par exemple du type Cu/SO4Cu en milieu solide ou Ag/Ag Cl en milieu liquide.

La sortie de la chaîne 5 est elle-même reliée soit en temps réel, soit en différé à une unité de calcul 7 permettant de fournir les résultats recherchés.

Les électrodes 3 et 6 étant déplacées à la surface du terrain 2 le long de la canalisation 1 avec l'électrode 6 au-dessus de la canalisation, deux tensions sont échantillonnées à intervalles réguliers en des points de la surface très proches les uns des autres, espacés par exemple d'une distance de l'ordre d'un centimètre.

L'une des mesures est effectuée avec l'interrupteur 4 ouvert. On mesure dans ces conditions la tension $V_1$ structure/surface. L'autre mesure est effectuée avec l'interrupteur 4 fermé auquel cas on mesure la tension $V_2$ structure/environnement immédiat.

La figure 2 illustre un autre principe de mesure d'où l'on peut déduire les tensions précitées.

Dans ce cas, il s'agit de tensions électriques flottantes entre une électrode de référence 8 placée au-dessus de la canalisation 1 et deux autres électrodes de référence 9a et 9b placées de part et d'autre de l'électrode 8.

La mesure de l'impédance de transfert structure/surface s'effectue comme représenté à la figure 3, en injectant un courant i dans la structure.

A cet effet, un générateur 10 est connecté entre la canalisation 1 et une électrode métallique 11 déplacée linéairement le long de la surface du terrain 2 au-dessus de la canalisation 1.

Un dispositif 12 permet de mesurer la tension v entre la canalisation 1 et la surface du terrain, et un autre dispositif 13 connecté aux bornes d'une résistance en série 14, permet de mesurer le courant i.

Dans la pratique, les dispositifs 12 et 13 font en fait partie de la chaîne d'acquisition de mesure 5.

De la connaissance de la tension v et du courant i en des points continûment ou pratiquement continûment répartis le long de la canalisation 1, on déduit par v/i la courbe d'impédance de transfert entre la canalisation et la surface du terrain en tout point le long de la canalisation.

On connaît en un certain nombre de points significatifs de cette courbe, la résistivité de l'environnement, obtenue par exemple par la méthode précédemment citée. On peut donc corréler cette résistivité à l'impédance de transfert en ces points particuliers, et en déduire ainsi par des moyens connus la courbe de résistivité le long de la canalisation 1. Cette courbe est obtenue par, et mémorisée dans l'unité de calcul 7.

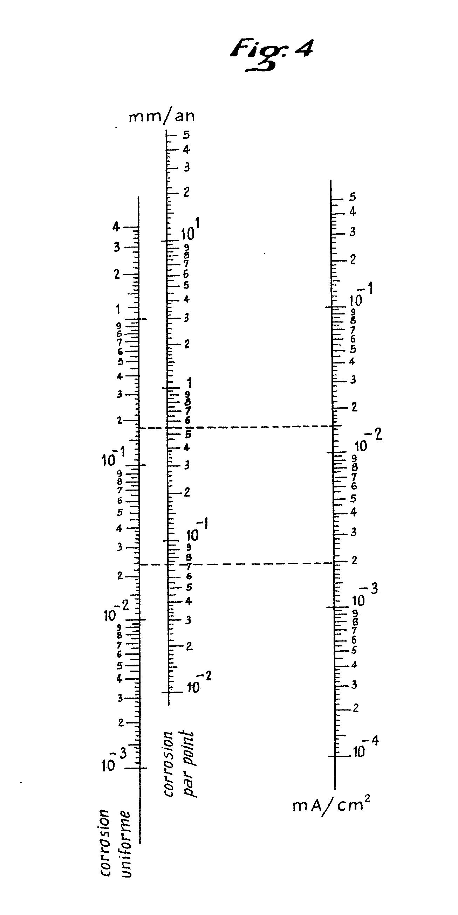

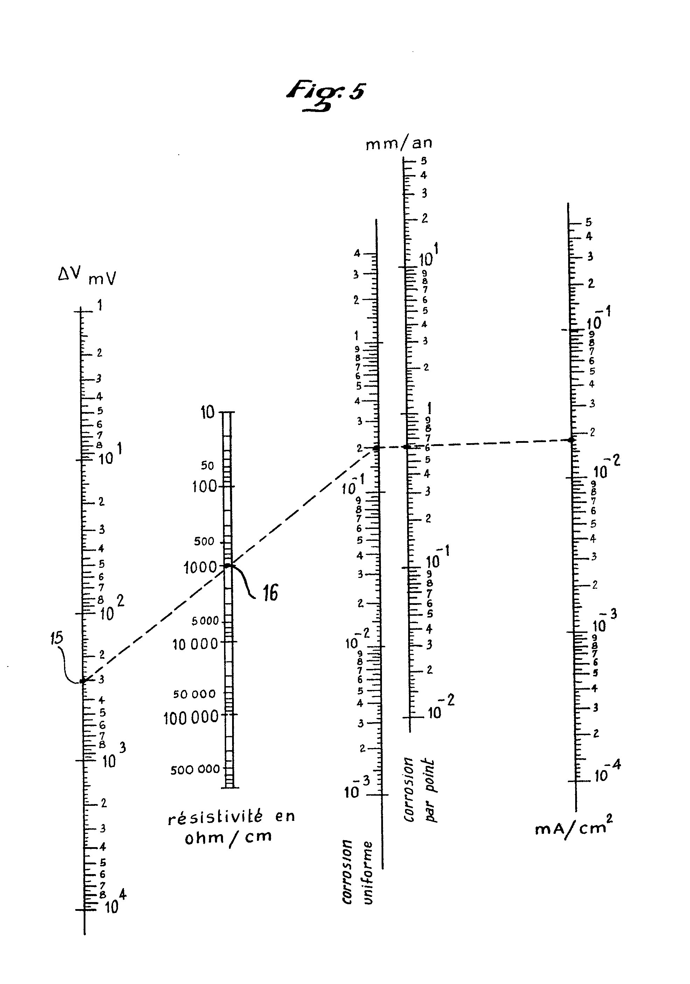

L'unité 7 contient également en mémoire des tables de correspondance du type de celles représentées sous forme d'abaques aux figures 4 et 5.

La figure 4 représente le cas d'une structure métallique non protégée cathodiquement.

Dans ce cas, on obtient à partir des mesures de $V_1$ et $V_2$ de la figure 1, la différence $V_2$ $V_1$ puis, par division par la résistivité obtenue conformément à la figure 3, la courbe de densité de courant sortant de la structure le long de la canalisation 1.

On peut ainsi, à partir du diagramme de la figure 4, déduire directement en chaque point le long de la canalisation la vitesse de corrosion uniforme et la vitesse de corrosion par point en fonction de cette densité de courant.

A titre d'exemple, pour une densité de courant sortant de 2μA, la perte potentielle de métal en corrosion uniforme est de 0,024 mm/an et en corrosion par point de 0,070 mm/an. Pour une densité de courant sortant de 15 μA, les pertes potentielles de métal sont respectivement de 0,18 mm/an et de 0,55 mm/an.

Dans le cas d'une installation protégée cathodiquement, on opère comme montré à la figure 5.

Dans ce cas, on part de la tension interfacielle structure/environnement immédiat $V_2$ obtenue comme décrit en référence à la figure 1, d'où l'on déduit la tension de référence fixe de 950 mV choisie par exemple comme critère absolu de protection.

La résistivité est obtenue comme montré à la figure 3.

De la différence de tension résultante et de la résistivité, on déduit directement la vitesse potentielle de corrosion ainsi que, si on le souhaite la densité de courant.

A titre d'exemple, si la tension d'interface métal/environnement direct est de -650 mV, l'écart de tension par rapport à la tension de protection est de 300 mV. Si la résistivité mesurée est de 1000 ohm/cm/cm$^2$, on obtient en joignant les points correspondants 15 et 16 des échelles d'écart de tension et de résistivité une perte potentielle de métal en corrosion uniforme de 0,2 mm/an et en corrosion par point de 0,65 mm/an, la densité de courant sortant étant de 18μA.

Bien entendu, dans le cas d'une structure recouverte d'un revêtement isolant, ces vitesses de corrosion ne sont que des vitesses potentielles, la corrosion ne se produisant effectivement qu'en cas de défaut du revêtement. Ces défauts sont localisés de façon connue en soi, par exemple, pour des procédés électriques ou électromagnétiques.

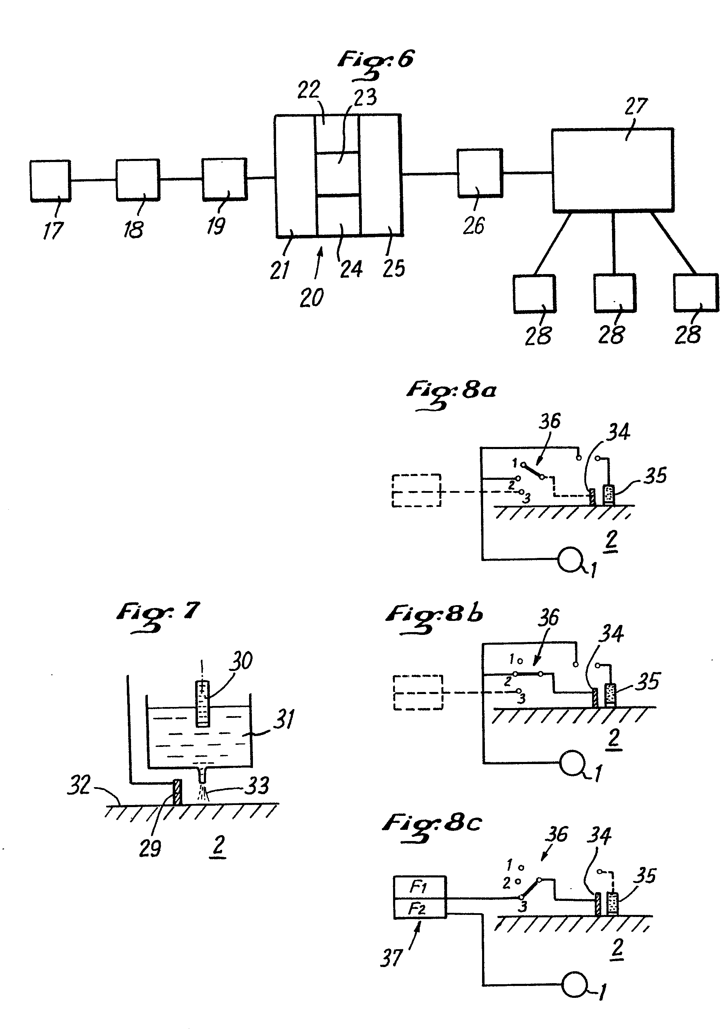

Si l'on se réfère maintenant à la figure 6 dans laquelle une seule voie de mesure a été représentée, on voit en 17, les capteurs, et en 18 les circuits de commutation permettant au dispositif de fonctionner dans ses différents modes successifs, comme celà sera exposé en référence aux figures 8a à 8c.

Les circuits 19 assurent le traitement analogique des différentes données propres à chacune des voies de mesure, ainsi que le transfert vers les électrodes des signaux électriques à appliquer à la structure étudiée, ces signaux provenant de l'unité centrale.

Cette unité centrale est représentée d'une manière générale en 20 et correspond sensiblement à la référence 5 de la figure 1.

Cette unité comporte en 21 la conversion analogique/numérique des signaux en provenance des différentes voies de mesure et l'adaptation à leur exploitation dans leurs différentes phases de traitement. En 22, l'unité 20 génère un signal de fréquence spécifiée pour la détermination, conformément à la figure 3, de l'impédance de transfert en chaque point, par exemple dans une gamme relativement élevée de l'ordre de 8 à 15 kHz. En 23, l'unité 20 génère de façon similaire un signal de fréquence relativement basse, par exemple compris entre 80 et 190 Hz, utilisé pour analyser de façon connue en soi l'état des revêtements en chaque point.

En 24, les données relevées subissent un premier traitement de manière à les rendre immédiatement utilisables au cours de la mesure, et en 25, ces données sont mises en mémoire et éventuellement visualisées.

La référence 26 représente une éventuelle transmission à distance vers un ordinateur central 27 correspondant sensiblement à la référence 7 de la figure 1.

Cet ordinateur central 27 permet d'exécuter toutes les phases nécessaires au traitement des données et à leur visualisation sur tout moyen 28 convenable.

La figure 7 représente deux électrodes du dispositif selon l'invention.

L'électrode métallique 29 est constituée par exemple par une roue du dispositif permettant de le déplacer le long de la structure.

L'électrode de référence 30 est partiellement immergée dans un liquide conducteur 31, par exemple de l'eau convenablement minéralisée, qui est projeté sur la surface 32 du terrain 2 sous forme d'un jet 33 de manière à réaliser un contact électrique entre l'électrode 30 et le terrain.

Les figures 8a à 8c illustrent les commutations réalisées en 18 de la figure 6.

On voit sur ces figures la canalisation 1 enterrée dans un terrain 2 avec une électrode métallique 34 et une électrode de référence 35.

Un commutateur à trois voies 36 assure les différentes commutations.

Avec le commutateur 36 en position 1, comme représenté à la figure 8a, on mesure aux bornes du dispositif la tension structure/surface.

Avec le commutateur 36 en position 2, comme représenté dans la figure 8b, on mesure la tension d'interface structure/environnement direct, puisque l'électrode métallique 34 est alors connectée à la canalisation 1.

Enfin, avec le commutateur 36 dans sa position 3 représentée à la figure 8c, on injecte dans la structure des courants électriques de fréquences F1 et F2 à l'aide de deux générateurs 37 pour déterminer l'impédance de transfert structure/surface, et pour contrôler l'état du revêtement de la structure.

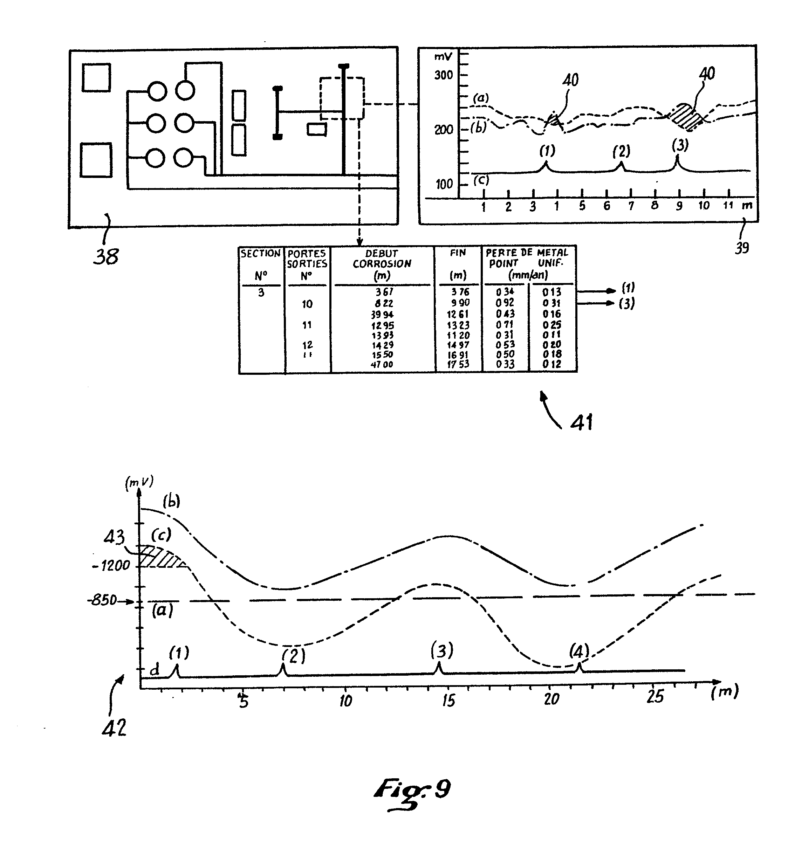

Enfin, la figure 9 illustre les résultats qui peuvent être obtenus par l'invention.

On voit en 38 un plan simplifié d'une structure à contrôler avec, dans le cadre en pointillés, la zone concernée par les courbes et le tableau suivant.

La référence 39 désigne les courbes obtenues après traitement dans l'ordinateur central, à savoir en (a) la tension structure/surface, en (b) la tension structure/environnement, et en (c) les défauts de revêtement (1), (2) et (3).

Sur ces courbes apparaissent immédiatement les zones de sortie de courant 40, c'est-à-dire les zones de corrosion potentielle. Ces zones doivent être considérées comme étant en situation réelle de corrosion s'il y a simultanément un défaut de revêtement, ce qui est effectivement le cas au niveau des défauts (1) et (3).

Le tableau 41 reprend les différentes mesures et les calculs effectués, conformément aux figures 4 et 5, pour déterminer les vitesses potentielles de corrosion en différents points de la structure. Ces vitesses sont des vitesses réelles de corrosion aux emplacements de défauts de revêtement tels que (1) et (3).

Les courbes 39 et le tableau 41 correspondent au cas d'une structure non protégée cathodiquement, alors que les courbes qui vont être maintenant décrites correspondent à une structure protégée.

Les courbes 42 représentent en (a) la tension de référence de - 850 mV qui a ici été choisie comme seuil de corrosion, en (b) la tension structure/surface, et en (c) la tension d'interface structure/environnement immédiat. La plus grande partie de la courbe (c) se trouvant en-dessous de - 850 mV, la protection est insuffisante dans les zones correspondantes. Toutefois, la corrosion n'apparaîtra qu'aux points (2) et (4) correspondant à des défauts de revêtement représentés sur la courbe (d). On notera en outre la zone hachurée 43 où la courbe (c) est au-dessus de - 1200 mV, ce qui correspond à un excès de protection, avec les risques de décollement du revêtement que cela entraîne, ou de corrosion par présence d'ions hydrogénes (Hydrogen Corrosion Cracking).

Diverses variantes et modifications peuvent bien entendu être apportées à la description qui précède sans sortir pour autant du cadre ni de l'esprit de l'invention.

**Revendications**

1 - Procédé de détermination de la vitesse de corrosion d'une structure métallique continue enterrée ou immergée, caractérisé par le fait que l'on injecte un courant électrique entre ladite structure et des points de la surface sensiblement continûment répartis au voisinage de la structure, que l'on en déduit la courbe d'impédance de transfert métal de la structure/surface, que l'on mesure en des points discrets la résistivité de l'environnement, que l'on corrèle les mesures d'impédance aux mesures de résistivité pour obtenir la courbe de résistivité, que l'on mesure, en l'absence de courant injecté, et en des points sensiblement continûment répartis de la structure, la tension d'interface métal de la structure/environnement, et que l'on déduit les possibilités de corrosion des courbes de résistivité et de tension.

2 - Procédé selon la revendication 1, caractérisé par le fait que ladite structure n'est pas protégée cathodiquement, que l'on mesure également, en l'absence de courant injecté, et en des points sensiblement continûment répartis de la structure, la tension métal de la structure/surface, que l'on déduit la courbe de densité de courant de la différence des deux courbes de tension et de la courbe de résistivité, et que l'on déduit la vitesse de corrosion de la courbe de densité de courant.

3 - Procédé selon la revendication 1, caractérisé par le fait que ladite structure est protégée cathodiquement, et que l'on déduit la vitesse de corrosion de la courbe de résistivité et de la courbe obtenue par soustraction d'une valeur fixe à la courbe de tension d'interface.

4 - Procédé selon l'une quelconque des revendications 1 à 3, caractérisé par le fait que ladite structure est revêtue d'un isolant électrique, et que l'on détermine en chaque point l'état du revêtement isolant.

5 - Dispositif pour la mise en oeuvre du procédé selon l'une quelconque des revendications 1 à 4, caractérisé par le fait qu'il comprend un ensemble mobile à la surface du milieu dans lequel ladite structure métallique continue est enterrée ou immergée, ledit ensemble mobile comprenant une pluralité d'électrodes (3,6,8,9a,9b,11,34,35) agencées pour rester en contact électrique permanent avec la surface au cours du déplacement, au moins l'une des électrodes étant une électrode métallique (11) pour injecter un courant électrique dans ladite structure et au moins une autre électrode étant une électrode de référence (6) pour mesurer la tension d'interface métal de la structure/environnement ; un ensemble de mesure et de mémorisation (5) pour mesurer le courant injecté et les tensions correspondantes et les mémoriser ; et un ensemble de calcul (7) pour déduire la vitesse de corrosion des mesures mémorisées.

6 - Dispositif selon la revendication 5, caractérisé par le fait qu'il comprend des moyens (5) pour mesurer la tension entre une électrode métallique et une électrode de référence en contact électrique avec deux points de la surface proches l'un de l'autre, et un commutateur pour connecter sélectivement l'électrode métallique à la structure.

7 - Dispositif selon la revendication 5, caractérisé par le fait qu'il comprend trois électrodes de référence (8, 9a, 9b) en contact électrique avec la surface, et des moyens pour mesurer la tension entre une électrode de référence centrale et les deux électrodes de référence latérales.

8 - Dispositif selon l'une quelconque des revendications 5 à 7, caractérisé par le fait que ledit ensemble de calcul comprend des moyens pour calculer la résistivité de l'environnement à partir des données fournies par l'ensemble de mesure et de mémorisation, et une mémoire pour mémoriser des tables de correspondance entre la résistivité calculée et la tension mesurée d'une part, et la vitesse de corrosion d'autre part.

9 - Dispositif selon l'une quelconque des revendications 5 à 8, caractérisé par le fait qu'il comprend des moyens pour déterminer l'état d'un revêtement isolant disposé sur la structure.

10 - Dispositif selon l'une quelconque des revendications 5 à 9, caractérisé par le fait qu'au moins une desdites électrodes est électriquement en contact avec la surface par l'intermédiaire d'un jet de liquide conducteur.

Fig:1

5
7
4
3
6
2
1

Fig:2

9a
8
9b
2
1

Fig:3

10
i
14
12
13
v
11
2
1

*Fig. 4*

mm/an
corrosion uniforme
corrosion par point
mA/cm²

Fig: 5
ΔV mV
15
16
résistivité en ohm / cm
mm/an
corrosion uniforme
corrosion par point
mA/cm²

Fig:6
17
18
19
22
23
24
21
20
25
26
27
28
28
28

Fig:8a
36
34
35
1
2
3
2
1

Fig: 7
30
31
32
33
29
2

Fig:8b
36
34
35
1
2
3
2
1

Fig:8c
36
34
35
1
2
3
F1
F2
37
2
1

38
mV
300
200
100
(a)
(b)
(c)
40
40
(1)
(2)
(3)
1 2 3 1 5 6 7 8 9 10 11 m
39
(1)
(3)
41
(m V)
(b)
(c)
43
-1200
-850
(a)
d
(1)
(2)
(3)
(4)
5
10
15
20
25
(m)
42

| SECTION N° | PORTES SORTIES N° | DEBUT CORROSION (m) | FIN (m) | PERTE DE METAL POINT (mm/an) | UNIF. (mm/an) |
|---|---|---|---|---|---|
| 3 | | 3 67 | 3 76 | 0 34 | 0 13 |
| | 10 | 8 22 | 9 90 | 0 92 | 0 31 |
| | | 39 94 | 12 61 | 0 43 | 0 16 |
| | 11 | 12 95 | 13 23 | 0 71 | 0 25 |
| | | 13 93 | 11 20 | 0 31 | 0 11 |
| | 12 | 14 29 | 14 97 | 0 53 | 0 20 |
| | 11 | 15 50 | 16 91 | 0 50 | 0 18 |
| | | 47 00 | 17 53 | 0 33 | 0 12 |

Fig: 9

Office européen des brevets

# RAPPORT DE RECHERCHE EUROPEENNE

Numero de la demande

EP 89 40 2113

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 229 573 (TOTAL)<br>* Revendications 1,7,8,11; figures 1,3,4B,6 * | 1-9 | G 01 N 17/00 |
| Y | GB-A-2 025 056 (KASAHARA)<br>* Page de garde; figure 1 * | 1-9 | |
| A | GB-A-1 342 949 (GLAZKOV)<br>* Colonne 1, lignes 17-40; figures * | 1 | |
| A | FR-A-2 527 772 (ELF)<br>* Revendications * | 1 | |
| A | US-A-2 344 672 (BLASIER)<br>* Page 2, colonne 1, lignes 11-55 * | 1 | |

DOMAINES TECHNIQUES RECHERCHES (Int. Cl.5)

G 01 N
C 23 F

Le présent rapport a été établi pour toutes les revendications

| Lieu de la recherche | Date d'achèvement de la recherche | Examinateur |
|---|---|---|
| LA HAYE | 02-10-1989 | KOUZELIS D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)